# EUROPEAN PATENT APPLICATION

(11) **EP 4 703 248 A1**
(43) Date of publication of application: **04.03.2026**
(21) Application number: 25198315.1
(22) Date of filing: 27.08.2025
(51) Int. Cl.: B62J 43/16, B62J 43/28, B62K 11/04, B62M 7/04, B62K 25/28

(54) **MOTORCYCLE**

(30) Priority: 27.08.2024 JP 2024145733
(71) Applicant: Kawasaki Motors, Ltd., Akashi, Hyogo 673-8666 (JP)
(72) Inventor: TAKEUCHI, Hiroshi, Akashi-shi, Hyogo, 673-8666 (JP)
(74) Representative: Hoefer & Partner Patentanwälte mbB

(57) **Abstract**

There is provided a motorcycle including: an engine (E) and an electric motor (M) that are drive sources; a vehicle body frame (FR) that supports the drive sources; a battery (60) that is charged by power of the engine (E) to drive the electric motor (M); and a pair of left and right swing arms (24) that support a rear wheel (26) on the vehicle body frame (FR) such that the rear wheel (26) is swingable about a swing axis (AX). The battery (60) is arranged rearward of the swing axis (AX) between the engine (E) and the rear wheel (26).

## Description

### TECHNICAL FIELD

The present disclosure relates to a hybrid motorcycle including both an engine and an electric motor as drive sources.

### BACKGROUND ART

In a hybrid motorcycle including an engine and an electric motor as drive sources, a battery that is charged by power of the engine to drive the electric motor is mounted (for example, WO2023/127075A1). The battery is, for example, a lithium-ion battery.

In the hybrid motorcycle, both the engine and the electric motor are mounted as drive sources in a limited space of the motorcycle. For this reason, it is difficult to ensure a space for arranging the battery for driving the electric motor.

Further, the battery for driving the electric motor is a heavy object. Accordingly, when such a battery is mounted on the motorcycle, it is required to reduce an influence on a motion performance of the motorcycle.

### SUMMARY OF INVENTION

The present disclosure provides a motorcycle that can reduce an influence on a motion performance while arranging a battery for driving an electric motor by effectively utilizing a space.

According to an illustrative aspect of the present disclosure, a motorcycle includes: an engine and an electric motor that are drive sources; a vehicle body frame that supports the drive sources; a battery that is charged by power of the engine to drive the electric motor; and a pair of left and right swing arms that support a rear wheel on the vehicle body frame such that the rear wheel is swingable about a swing axis. The battery is arranged rearward of the swing axis between the engine and the rear wheel.

According to the motorcycle of the present disclosure, the battery that drives the electric motor is arranged rearward of the swing axis of the swing arms between the engine and the rear wheel. Accordingly, in the motorcycle having a limited space for device arrangements, the battery for driving the electric motor can be arranged by effectively utilizing the space. Further, the battery for driving the electric motor is arranged in a vicinity of a center of gravity of the motorcycle. Accordingly, the influence on the motion performance of the motorcycle can be reduced. Specifically, by arranging the battery in the vicinity of the center of gravity of the motorcycle, a moment of inertia in roll and pitch directions can be reduced.

### BRIEF DESCRIPTION OF DRAWINGS

FIG. 1 is a right side view illustrating a motorcycle according to a first embodiment of the present disclosure;
FIG. 2 is a left side view illustrating the same motorcycle;
FIG. 3 is a plan view illustrating the same motorcycle;
FIG. 4 is an enlarged side view of a main part of FIG. 1; and
FIG. 5 is a right side view illustrating a motorcycle according to a second embodiment of the present disclosure.

### DESCRIPTION OF EMBODIMENTS

Hereinafter, a preferred embodiment of the present disclosure will be described with reference to the drawings. In the present description, "right" and "left" refer to "right" and "left" as viewed from a driver who drives a vehicle. That is, a left-right direction coincides with a vehicle width direction. In addition, "front" and "rear" refer to "front" and "rear" in a traveling direction of the vehicle. That is, a longitudinal direction of a vehicle body coincides with a front-rear direction of the vehicle. In the vehicle width direction, an inner side in the vehicle width direction refers to a side toward a center line of the vehicle body that extends in the front-rear direction, and an outer side in the vehicle width direction refers to a side away from the center line of the vehicle body.

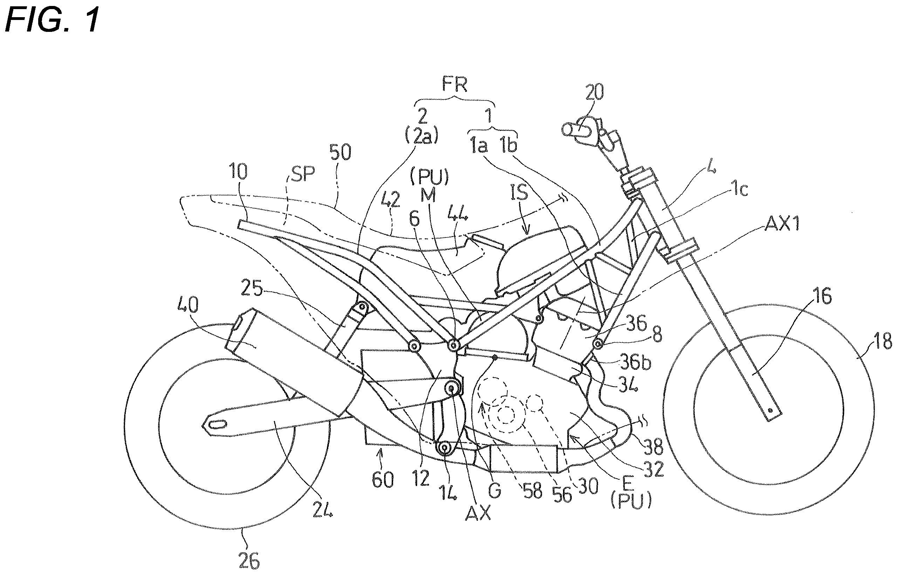

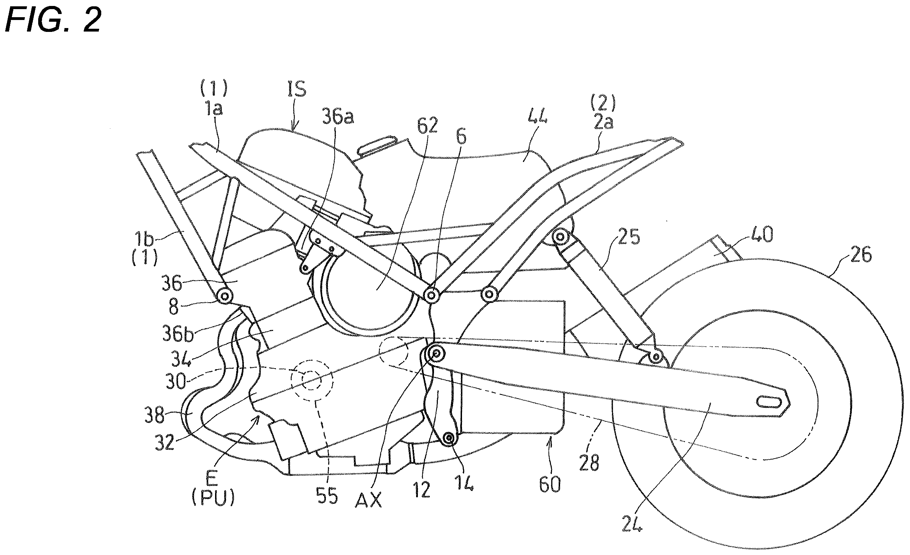

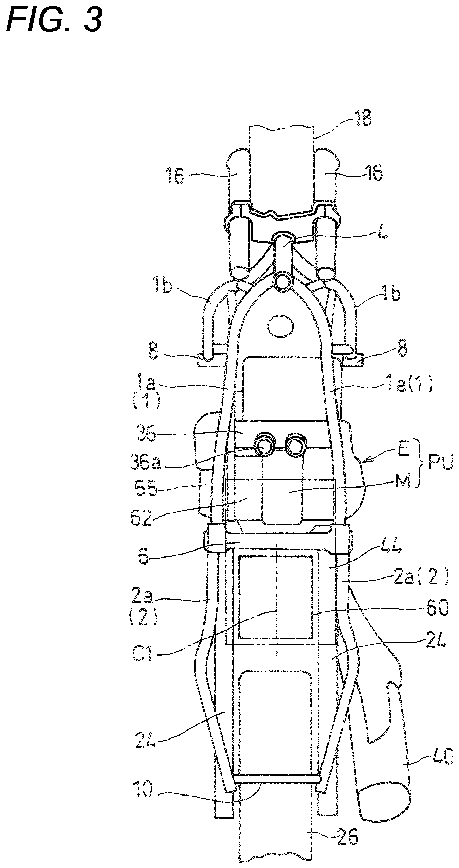

FIG. 1 is a right side view illustrating a motorcycle according to a first embodiment of the present disclosure, FIG. 2 is a left side view of the motorcycle, and FIG. 3 is a plan view of the motorcycle. As illustrated in FIG. 1, the motorcycle according to the present embodiment includes a power unit PU including an internal combustion engine E as a first drive source and an electric motor M as a second drive source. That is, the motorcycle according to the present embodiment may travel by the engine E only, which is an internal combustion engine, by the electric motor M only, or by the engine E and the electric motor M at the same time, depending on a riding mode.

In the present embodiment, a vehicle body frame FR of the motorcycle is a frame structure in which frame members are connected by welding. The vehicle body frame FR includes a main frame 1 constituting a front half portion and a rear frame 2 constituting a rear half portion. The main frame 1 extends obliquely downward and rearward from a head pipe 4 at a front end. The rear frame 2 extends obliquely upward and rearward from a rear end portion of the main frame 1.

The main frame 1 includes a first frame piece 1a extending rearward from an upper portion of the head pipe 4 and a second frame piece 1b extending rearward from a lower portion of the head pipe 4. The main frame 1 further includes a plurality of reinforcing frame pieces 1c coupling the first frame piece 1a with the second frame piece 1b.

As illustrated in FIG. 3, the first frame piece 1a and the second frame piece 1b are provided in left and right pairs. The left and right first frame pieces 1a, 1a are coupled by a first cross frame 6, which extends in the vehicle width direction, at rear ends thereof. Each second frame piece 1b is provided with an engine mount portion 8 at a rear end thereof. The engine mount portion 8 in the present embodiment is a cylindrical member having an axis in the vehicle width direction.

The rear frame 2 is coupled to the first cross frame 6 at a front end and extends rearward from the first cross frame 6. The rear frame 2 also includes a pair of left and right rear frame pieces 2a, 2a. The left and right rear frame pieces 2a, 2a are coupled by a second cross frame 10, which extends in the vehicle width direction, at rear ends thereof.

As illustrated in FIG. 1, a pivot frame 12 constituting a part of the vehicle body frame FR is coupled to the rear end portion of the main frame 1. The pivot frame 12 is formed of a plate material extending in an upper-lower direction, and is provided in pair. The left and right pivot frames 12 are coupled to the first cross frame 6 at upper end portions thereof, and are coupled to a third cross frame 14, which extends in the vehicle width direction, at lower end portions thereof.

The head pipe 4 supports a front fork 16. The front fork 16 supports a front wheel 18 at a lower end portion thereof, and is attached to a handle 20 at an upper end portion thereof. The pivot frame 12 supports a pair of left and right swing arms 24 in a vertically swingable manner. The swing arms 24 are attached to a rear wheel 26 at rear end portions thereof. The swing arms 24 support the rear wheel 26 on the vehicle body frame FR such that the rear wheel 26 is swingable about a swing axis AX.

A rear suspension 25 is bridged between the swing arms 24 and the rear frame 2. The rear suspension 25 in the present embodiment includes so-called two suspensions. That is, the pair of left and right rear suspensions 25 are bridged between the left and right swing arms 24 and the left and right rear frame pieces 2a, respectively.

An engine E is arranged between the front wheel 18 and the rear wheel 26 below the main frame 1. Power of the engine E is transmitted to the rear wheel 26 via a power transmission member 28 illustrated in FIG. 2, so that the rear wheel 26 is driven. The power transmission member 28 is, for example, a drive chain. However, the power transmission member 28 is not limited to the drive chain, and an endless belt shaped in strip such as a toothed belt may be used as the power transmission member 28, for example.

As illustrated in FIG. 1, the engine E includes a crankshaft 30 extending in the vehicle width direction, a crankcase 32 supporting the crankshaft 30, a cylinder 34 protruding upward from the crankcase 32, and a cylinder head 36 coupled to an upper portion of the cylinder 34. In the present embodiment, the cylinder 34 and the cylinder head 36 have an axis AX1 inclined upward and forward. In the present embodiment, the engine E including the crankcase 32, the cylinder 34, and the cylinder head 36 has a substantially L shape in a side view.

The engine is supported by the vehicle body frame FR. Specifically, a front portion of the cylinder head 36 is supported by the engine mount portion 8, and a rear portion of the cylinder head 36 is supported by the first frame piece 1a of the main frame 1. Further, a rear end portion of the crankcase 32 is supported by the pivot frame 12 in two upper and lower positions. A support structure of the engine E is not limited thereto.

As shown in FIG. 3, the cylinder head 36 is formed with an intake port 36a in a rear surface thereof and an exhaust port 36b in a front surface thereof. The intake port 36a is connected to an intake device IS. The intake device IS supplies outside air as intake air to the intake port 36a, and includes an air cleaner, a throttle body, and the like.

The exhaust port 36b is connected to an exhaust pipe 38. The exhaust pipe 38 extends rearward below the engine E and is connected to an exhaust muffler 40 on a right side of the rear wheel 26. The exhaust muffler 40 muffles exhaust from the exhaust pipe 38 and discharges the exhaust to an outside.

The motorcycle further includes a seat 42 on which a driver sits, and a fuel tank 44 in which fuel for the engine E is stored. The fuel tank 44 is arranged rearward of the engine E and below the seat 42. Specifically, the fuel tank 44 is arranged between the left and right rear frames 2, 2 in a plan view of FIG. 3. As illustrated in FIG. 1, the seat 42 is arranged above the intake device IS and the fuel tank 44.

The motorcycle according to the present embodiment includes a resin cowling 50, which is indicated by a two-dot chain line and covers the vehicle body from the outside.

As illustrated in FIG. 2, a generator 55 is provided on one side that is one end in an axial direction of the crankshaft 30, in the present embodiment, on a left side. The generator 55 according to the present embodiment is a generator (ISG) having a starter motor function. The generator 55 generates electric power by the power of the engine E, that is, by rotation of the crankshaft 30.

As illustrated in FIG. 1, a clutch 56 is provided on the other side that is the other end in the axial direction of the crankshaft 30, in the present embodiment, on a right side. The clutch 56 switches between transmitting and interrupting the rotation of the crankshaft 30.

The crankcase 32 accommodates therein a transmission 58 in a region rearward of the crankshaft 30. That is, a rear portion of the crankcase 32 constitutes a transmission case that accommodates the transmission 58. The crankshaft 30 is connected to an input shaft of the transmission 58 via the clutch 56, and the power transmission member 28 is connected to an output shaft of the transmission 58. That is, the rotation of the crankshaft 30 is shifted by the transmission 58 and then transmitted to the rear wheel 26.

Above the crankcase 32 and rearward of the cylinder 34, the electric motor M is arranged. Specifically, the electric motor M is arranged above the crankcase 32, and is arranged forward of a rear end of the crankcase 32 and rearward of the cylinder 34. An output shaft of the electric motor M is connected to the input shaft of the transmission 58. That is, rotation of the output shaft of the electric motor M is shifted by the transmission 58 and then transmitted to the rear wheel 26.

When the rotation of the output shaft of the electric motor M is transmitted to the input shaft of the transmission 58 downstream of the clutch 56, the power of the electric motor M is transmitted as a traveling drive force. When the clutch 56 is disengaged, traveling can be made by the electric motor alone. When the clutch 56 is engaged, traveling can be made by using both the electric motor M and the engine E. When the clutch 56 is engaged and the electric motor M is stopped, traveling can made by the engine alone.

As illustrated in FIG. 2, the motorcycle according to the present embodiment includes a drive battery 60 that drives the electric motor M, and an inverter 62 that supplies an output of the generator 55 to the drive battery 60. The drive battery 60 according to the present embodiment is a 48 V lithium-ion battery. The drive battery 60 is not limited thereto.

The inverter 62 according to the present embodiment is a DC/DC converter integrated inverter. That is, the inverter 62 according to the present embodiment supplies the output of the generator 55 to the 48 V drive battery 60, and also supplies the output to a control power supply battery having a lower voltage than the drive battery 60. The control power supply battery is, for example, a 12 V lead storage battery.

In the present embodiment, the inverter 62 is arranged side by side with the electric motor M in the vehicle width direction above the engine E. The inverter 62 is arranged on an opposite side from the exhaust muffler 40 in the vehicle width direction relative to a central axis C1 extending in the front-rear direction of the vehicle body. That is, the inverter 62 is arranged on the left side of the vehicle body, and the exhaust muffler 40 is arranged on the right side of the vehicle body. In the present embodiment, the engine E is shifted to the right side of the vehicle body relative to the central axis C1 of the vehicle body, and the inverter 62 is arranged in an empty space on the left side.

The output of the generator 55 is supplied to the drive battery 60 via the inverter 62, and the drive battery 60 is charged. Specifically, the generator 55 is an AC generator, and the output thereof is converted into DC power by the inverter 62 and supplied to the drive battery 60. The electric power charged to the drive battery 60 is supplied to the electric motor M to drive the electric motor M.

In an electric and hybrid riding mode, a drive force of the electric motor M is transmitted to the rear wheels 26 via the power transmission member 28. When the engine is started, electric power is supplied from the drive battery 60 to the generator 55, and the generator 55 functions as a starter.

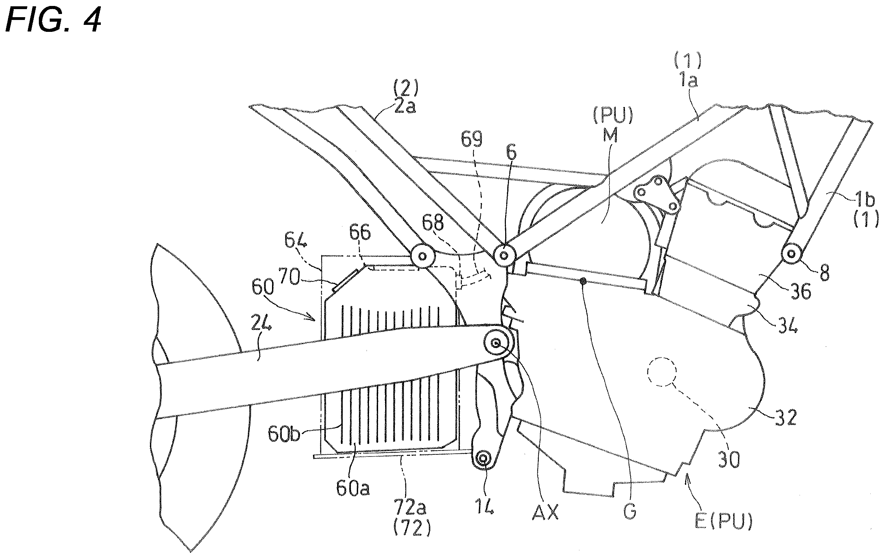

The drive battery 60 is arranged in the vicinity of the center of gravity G of the vehicle body. Specifically, the drive battery 60 is arranged rearward of the swing axis AX between the engine E and the rear wheel 26 in the front-rear direction. The drive battery 60 is arranged between the left and right swing arms 24, 24 in the plan view illustrated in FIG. 3. A part of the drive battery 60 overlaps the swing arms 24 in a side view illustrated in FIG. 4. The drive battery 60 is arranged below the fuel tank 44.

In the upper-lower direction, an upper end of the drive battery 60 is at substantially the same height as an upper end of the rear portion of the crankcase 32, that is, an upper end of the transmission case. A lower end of the drive battery 60 is at substantially the same height as a lower end of the engine E.

A front end of the drive battery 60 is located in substantially the same position as a rear end of the pivot frame 12 in the front-rear direction. In the present embodiment, a part of the front end of the drive battery 60 overlaps the rear end portion of the pivot frame 12 in a side view. A rear end of the drive battery 60 is in substantially the same position as a rear end of the fuel tank 40.

The drive battery 60 according to the present embodiment is accommodated in a battery case 64. The battery case 64 according to the present embodiment has a rectangular box shape with an upper side open, and the drive battery 60 is accommodated therein. The battery case 64 is made of metal, for example, an aluminum alloy. The shape and the material of the battery case 64 are not limited thereto.

In the drive battery 60 according to the present embodiment, a plurality of cells are accommodated in a box-shaped housing 60a. The housing 60a is made of metal, for example, an aluminum alloy. However, the material of the housing 60a is not limited thereto.

The housing 60a is formed with cooling fins 60b on an outer surface thereof. The cooling fins 60b are protrusions provided to increase a surface area and improve a heat exchange efficiency. In the present embodiment, the cooling fins 60b are formed on two side surfaces, a front surface, and a rear surface of the housing 60a. In the present embodiment, the cooling fins 60b extend in the upper-lower direction.

A control board 66 is arranged on an upper surface of the battery 60. The control board 66 monitors information such as a charge and discharge state and a temperature of the battery 60. The information monitored by the control board 66 is transmitted to, for example, an electronic control unit (ECU) of the vehicle or the engine E.

A connector 68 is arranged at an upper end portion of the battery 60. Specifically, the connector 68 is arranged at a front portion of the upper end portion of the battery 60. The connector 68 is connected to one end portion of a cable 69. The other end of the cable 69 is connected to the electric motor M. That is, the electric motor M and the battery 60 are connected by the cable 69, and the electric power charged to the battery 60 is supplied to the electric motor M via the cable 69.

In the present embodiment, a ventilation vent 70 is arranged at a rear portion of the upper end portion of the battery 60. That is, the ventilation vent 70 is arranged on an opposite side from the connector 68 at the upper end portion of the battery 60. The ventilation vent 70 allows gas to pass therethrough but does not allow liquid to pass therethrough. That is, outside air flows into the housing 60a via the ventilation vent 70, and gas inside the housing 60a flows to the outside. Rainwater, muddy water, and the like do not flow into the housing 60a from the ventilation vent 70, and even when a liquid leaks inside the housing 60a, the liquid does not flow to the outside from the ventilation vent 70.

An arrangement of the ventilation vent 70 is not limited to that in the present embodiment. The ventilation vent 70 may be arranged, for example, at a rear portion of an upper portion of the battery 60. Specifically, the ventilation vent 70 may be arranged at a rear portion of an upper half portion of the battery 60, that is, a rear portion that is an upper half part of the battery 60 in the upper-lower direction.

The drive battery 60 is supported on the vehicle body frame FR via a bracket 72. The bracket 72 according to the present embodiment supports a lower surface of the battery 60. That is, the bracket 72 supports the battery 60 from below.

Specifically, the bracket 72 includes a bracket piece 72a extending rearward from the third cross frame 14. The bracket piece 72a is detachably attached to the third cross frame 14 by a fastening member such as a bolt. A support structure of the bracket piece 72a is not limited thereto, and the bracket piece 72a may be joined to the third cross frame 14 by welding, for example. The bracket 72 may be provided at a part of the vehicle body frame FR other than the third cross frame 14.

The bracket piece 72a is arranged below the drive battery 60, and a rear end thereof is located rearward of a rear end of the drive battery 60. In a state in which the drive battery 60 is placed on an upper surface of the bracket 72, a front end portion and a rear end portion of the lower end portion of the drive battery 60 are fixed to the bracket 72 by fastening members such as bolts. This prevents the drive battery 60 from moving.

Further, an upper end portion of a front end portion of the drive battery 60 is fixed to the first cross frame 6 by a fastening member such as a bolt. This prevents the drive battery 60 from vibrating. A support structure of the drive battery 60 is not limited to that in the present embodiment.

According to the above configuration, the battery 60 that drives the electric motor M is arranged rearward of the swing axis AX of the swing arms 24 between the engine E and the rear wheel 26. Accordingly, the drive battery 60 and the electric motor M can be arranged by effectively using a limited space of the motorcycle.

Further, since the drive battery 60 is arranged in the vicinity of the center of gravity G of the motorcycle, an influence on a motion performance of the motorcycle can be reduced. Specifically, by arranging the drive battery 60 in the vicinity of the center of gravity G of the motorcycle, a moment of inertia in roll and pitch directions can be reduced.

In the present embodiment, the fuel tank 44 is arranged below the seat 42, and a storage space SP for a helmet is ensured rearward of the fuel tank 44, for example. That is, the vehicle body has a structure elongated rearward, and the swing arms 24 are elongated. The drive battery 60 is arranged in a space obtained by the elongated swing arms 24, that is, rearward of the swing axis AX and forward of the rear wheel 26. Further, since the swing arms 24 are elongated, a change in an anti-squat characteristic is small. In this manner, in the present embodiment, it is possible to reduce the change in the anti-squat characteristic while ensuring an arrangement space for the drive battery 60.

In the present embodiment, the drive battery 60 is arranged between the left and right swing arms 24, 24 in the plan view of FIG. 3. According to this configuration, the drive battery 60 can be arranged by effectively utilizing the space between the left and right swing arms 24, 24.

The rear suspension 25 according to the present embodiment is not a single suspension arranged on a vehicle body center line extending in the front-rear direction, but a pair of left and right two suspensions arranged outside the left and right swing arms 24, 24. Therefore, the drive battery 60 is arranged in a space where one suspension can be arranged, and thus the large drive battery 60 can be arranged between the left and right swing arms 24, 24 without extending a wheelbase.

In this manner, in the present embodiment, the swing arms 24 can be made as long as possible without extending the wheelbase. Accordingly, it is possible to achieve both a compact arrangement of the drive battery 60 and a reduction of the change in the anti-squat characteristic without extending the wheelbase.

In the present embodiment, a part of the drive battery 60 overlaps the swing arms 24 in the side view of FIG. 1. According to this configuration, the drive battery 60 is protected from an external force by the swing arms 24.

In the present embodiment, the electric motor M is attached to an upper surface of a rear portion of the engine E. According to this configuration, the electric motor M and the drive battery 60 can be arranged in the vicinity of the center of gravity G. As a result, concentrating masses as a whole can be achieved.

In the present embodiment, as shown in FIGS. 1, 2, and 4, the lower portion of the fuel tank 44 extends downward in shape from a front portion to a rear portion of the fuel tank 44. The vertical length of the rear portion of the fuel tank 44 is longer than that of the front portion of the fuel tank 44.

The front portion of the fuel tank 44, which has a shorter vertical length, is positioned above the electric motor M, whereas the rear portion of the fuel tank 44, which has a longer vertical length, is positioned above the drive battery 60. Furthermore, the lower end of the rear portion of the fuel tank 44 is positioned lower than the upper end of the electric motor M.

According to the above configuration, the mass of the motorcycle as a whole is concentrated, thereby minimizing the influence on the motion performance of the motorcycle and improving the handling stability of the motorcycle.

In the present embodiment, the control board 66 of the drive battery 60 is arranged on the upper surface of the drive battery 60. According to this configuration, muddy water and flying stones kicked up by the rear wheel 26 are less likely to move toward the control board 66.

In the present embodiment, the electric motor M and the drive battery 60 are connected by the cable 69, and the connector 68 to which the cable 69 is connected is arranged at the upper end portion of the drive battery 60. According to this configuration, the cable 69 can be shortened since the connector 68 is arranged close to the electric motor M.

Further, the connector 68 of the drive battery 60 is arranged between the first cross frame 6 and the swing axis AX of the swing arms 24 in the upper-lower direction.

In the present embodiment, the ventilation vent 70 is arranged at the rear portion of the upper portion of the drive battery 60. According to this configuration, exhaust from the ventilation vent 70 is less likely to be directed to the driver sitting on the seat 42. Further, it is possible to prevent muddy water, flying stones, and the like kicked up by the rear wheel 26 from moving toward the ventilation vent 70.

In the present embodiment, the drive battery 60 is accommodated in the battery case 64. According to this configuration, the drive battery 60 is protected from muddy water, flying stones, and the like kicked up by the rear wheel 26.

In the present embodiment, the lower surface of the drive battery 60 is supported by the bracket 72. According to this configuration, the drive battery 60 can be stably supported by being supported from below.

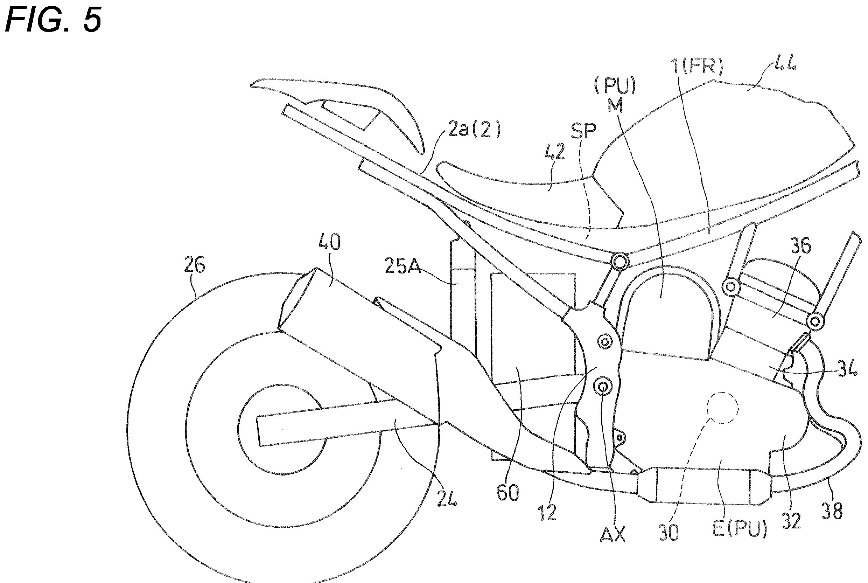

FIG. 5 is a right side view illustrating a motorcycle according to a second embodiment of the present disclosure. In description according to the second embodiment, the same components as those of the first embodiment are denoted by the same reference numerals, and detailed description thereof will be omitted.

The motorcycle according to the second embodiment is not a vehicle in which the fuel tank 44 is arranged below the seat 42 as in the first embodiment, but a vehicle in which the fuel tank 44 is arranged forward of the seat 42. In the second embodiment, the storage space SP for a helmet is provided below the seat 42.

Different from the motorcycle according to the first embodiment, a rear suspension 25A of the motorcycle according to the second embodiment is a so-called single suspension in which one rear suspension 25A is arranged on the vehicle body center line extending in the front-rear direction.

In the second embodiment, the drive battery 60 is arranged rearward of the swing axis AX and forward of the rear suspension 25A. The drive battery 60 according to the second embodiment is arranged between the left and right swing arms 24, 24 and between the left and right rear frame pieces 2a, 2a in the vehicle width direction.

Also in the second embodiment, similar to the first embodiment, it is possible to reduce an influence on a motion performance while arranging the drive battery 60 by effectively using a limited space of the motorcycle. Further, according to the motorcycle in the second embodiment, a large-sized battery large in the upper-lower direction, for example, a 96 V battery can also be arranged since the fuel tank 44, the storage space SP for a helmet, and the like are not arranged above the drive battery 60.

Also in the second embodiment, the connector 68 of the drive battery 60 may be arranged between the first cross frame 6 and the swing axis AX of the swing arms 24 in the upper-lower direction.

The motorcycle of the present disclosure includes following aspects 1 to 9.

According to an aspect 1 of the present disclosure, a motorcycle includes: an engine and an electric motor that are drive sources; a vehicle body frame that supports the drive sources; a battery that is charged by power of the engine to drive the electric motor; and a pair of left and right swing arms that support a rear wheel on the vehicle body frame such that the rear wheel is swingable about a swing axis, in which the battery is arranged rearward of the swing axis between the engine and the rear wheel.

According to an aspect 2 of the present disclosure, in the motorcycle according to aspect 1, the battery is arranged between the left and right swing arms in a plan view.

According to an aspect 3 of the present disclosure, in the motorcycle according to aspect 2, a part of the battery overlaps the swing arms in a side view.

According to an aspect 4 of the present disclosure, in the motorcycle according to any one of aspects 1 to 3, the electric motor is attached to an upper surface of a rear portion of the engine.

According to an aspect 5 of the present disclosure, in the motorcycle according to aspect 4, the electric motor and the battery are connected by a cable, and a connector to which the cable is connected is arranged at an upper end portion of the battery.

According to an aspect 6 of the present disclosure, in the motorcycle according to any one of aspects 1 to 5, a ventilation vent is arranged at a rear portion of an upper end portion of the battery.

According to an aspect 7 of the present disclosure, the motorcycle according to any one of aspects 1 to 6, further includes: a battery case that accommodates the battery.

According to an aspect 8 of the present disclosure, the motorcycle according to any one of aspects 1 to 7, further includes: a bracket that supports a lower surface of the battery.

According to an aspect 9 of the present disclosure, in the motorcycle according to any one of aspects 1 to 8, a control board of the battery is arranged on an upper surface of the battery.

The present disclosure is not limited to the above embodiments, and various additions, modifications, and deletions can be made without departing from the gist of the present disclosure. Therefore, such additions, modifications, and deletions are also included in the scope of the present disclosure.

## Claims

1. A motorcycle comprising:
an engine (E) and an electric motor (M) that are drive sources;
a vehicle body frame (FR) that supports the drive sources;
a battery (60) that is charged by power of the engine (E) to drive the electric motor (M); and
a pair of left and right swing arms (24) that support a rear wheel (26) on the vehicle body frame (FR) such that the rear wheel (26) is swingable about a swing axis (AX), wherein
the battery (60) is arranged rearward of the swing axis (AX) between the engine (E) and the rear wheel (26).

2. The motorcycle according to claim 1, wherein the battery (60) is arranged between the left and right swing arms (24) in a plan view.

3. The motorcycle according to claim 2, wherein a part of the battery (60) overlaps the swing arms (24) in a side view.

4. The motorcycle according to any one of claims 1 to 3, wherein the electric motor (M) is attached to an upper surface of a rear portion of the engine (E).

5. The motorcycle according to claim 4, wherein the electric motor (M) and the battery (60) are connected by a cable (69), and
a connector (68) to which the cable (69) is connected is arranged at an upper end portion of the battery (60).

6. The motorcycle according to any one of claims 1 to 5, wherein a ventilation vent (70) is arranged at a rear portion of an upper portion of the battery (60).

7. The motorcycle according to any one of claims 1 to 6, further comprising: a battery case (64) that accommodates the battery (60).

8. The motorcycle according to any one of claims 1 to 7, further comprising: a bracket (72) that supports a lower surface of the battery (60).

9. The motorcycle according to any one of claims 1 to 8, wherein a control board (66) of the battery (60) is arranged on an upper surface of the battery (60).
